Europäisches Patentamt

European Patent Office

Office européen des brevets

(11) Numéro de publication : **0 430 125 B1**

(12) **FASCICULE DE BREVET EUROPEEN**

(45) Date de publication du fascicule du brevet :
**20.12.95 Bulletin 95/51**

(51) Int. Cl.$^6$ : **H04L 1/16**

(21) Numéro de dépôt : **90122520.1**

(22) Date de dépôt : **26.11.90**

(54) **Procédé de demande automatique de retransmission pour installation de transmission numérique duplex à au moins une voie de retour bruitée et installation permettant la mise en oeuvre de ce procédé**

(30) Priorité : **28.11.89 FR 8915631**

(43) Date de publication de la demande :
**05.06.91 Bulletin 91/23**

(45) Mention de la délivrance du brevet :
**20.12.95 Bulletin 95/51**

(84) Etats contractants désignés :
**CH DE ES FR GB IT LI NL SE**

(56) Documents cités :
**EP-A- 0 193 091**
**IEEE GLOBAL TELECOMMUNICATIONS CONFERENCE, Tokyo, 15-18 novembre 1987, pages 2100-2104, IEEE, New York, US; M. NAKAMURA et al.: "ARQ scheme reinforced with past acknowledgement signals"**
**N.T.Z.-ARCHIV, vol. 6, no. 7, juillet 1984, pages 151-158, Berlin, DE; H.D.CLAUSEN et al.: "HDLC und ähnliche Leitungskontrollver-fahren für Satellitenkanäle"**

(73) Titulaire : **ALCATEL TELSPACE**
**5, rue Noel Pons**
**F-92734 Nanterre Cédex (FR)**

(72) Inventeur : **Darmon, Marc**
**21, rue Barbet de Jouy**
**F-75007 Paris (FR)**
Inventeur : **Pontif, Marc**
**44, rue de Medan**
**F-78670 Villennes Sur Seine (FR)**
Inventeur : **Sadot, Philippe**
**5 Passage Bullourde**
**F-75011 Paris (FR)**

(74) Mandataire : **Weinmiller, Jürgen et al**
**Lennéstrasse 9**
**Postfach 24**
**D-82336 Feldafing (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un procédé de demande automatique de retransmission en cas de message mal reçu, ou "procédé ARQ", pour installation de transmission numérique duplex d'informations dont au moins une voie de retour est bruitée et à une installation permettant la mise en oeuvre de ce procédé.

Trois solutions sont généralement utilisées pour diminuer le taux d'erreur d'une transmission numérique.

- La première consiste en un codage correcteur sans voie de retour (ce que les anglophones appellent "Forward Error Control" : FEC). Un défaut de cette stratégie de correction d'erreurs est sa faible adaptativité qui peut être gênante pour certains types de canaux (canal troposphérique ou canal brouillé). En effet, par exemple pour le canal troposphérique, les différents paramètres du canal tels que le rapport signal à bruit moyen, la bande de cohérence ou le temps de cohérence ne sont fixes qu'à petite échelle. Si l'on observe ces paramètres pendant quelques heures, quelques jours ou quelques mois, on se rend compte qu'ils subissent des fluctuations non négligeables. Ainsi, un code conçu pour fonctionner idéalement avec des paramètres donnés, sera probablement inefficace à certains moments de la journée ou de l'année. Ce procédé a l'avantage d'assurer un retard de transmission fixe. Mais il est inefficace contre les paquets d'erreurs s'il n'est pas associé à un entrelacement dont l'inconvénient est d'augmenter le retard de transmission.
- Une seconde solution est d'utiliser l'existence d'une voie de retour, en utilisant la stratégie d'ARQ ("Automatic Repeat reQuest"), stratégie de détection d'erreurs et de retransmission. On peut définir cette stratégie de la façon suivante :
  . Les données sont envoyées en paquets, et non en continu ;
  . Chaque paquet contient les symboles d'informations accompagnés de symboles de contrôle ;
  . Le récepteur utilise les symboles de contrôle pour détecter d'éventuelles erreurs de transmission. Selon le cas il accepte le bloc ou en demande la retransmission. Ainsi la stratégie d'ARQ utilise un code détecteur d'erreurs alors que la stratégie FEC utilise un code correcteur. Un code détecteur d'erreurs demande généralement un décodage plus simple qu'un code correcteur.

Cette stratégie introduit une redondance supplémentaire qui est la retransmission. Mais si la redondance propre au codage est fixe (et mesurée par le taux de codage), la seconde est une variable aléatoire. La redondance moyenne totale est mesurée par le taux de codage effectif. Le principal inconvénient de cette solution est que lorsque les conditions de transmissions sont mauvaises (canal fortement bruité) le code détecteur est vite submergé et le nombre de retransmissions est très important ce qui fait augmenter le retard de transmission. Pour pallier ce problème, on utilise actuellement l'association de stratégie d'ARQ et de codage correcteur : c'est la troisième solution.

- La troisième solution est appelée stratégie "hybride" car elle combine codage correcteur et procédure d'ARQ. Le code utilisé ne sert plus simplement à détecter les erreurs mais aussi à les corriger dans la limite de ces capacités. La stratégie est alors la suivante :
  . On émet une séquence codée ;
  . Le récepteur dispose d'un décodeur qui tente de décoder la séquence reçue. On utilise un certain critère qui mesure la confiance que l'on peut avoir dans la décision du décodeur ;
  . Si ce critère est satisfait, on estime que la séquence décodée est bien celle qui a été émise, sinon le récepteur demande une retransmission.

Ces deux derniers procédés nécessitent l'emploi d'une stratégie de demande de retransmission ARQ. Les trois stratégies les plus classiques sont actuellement les suivantes :

- La stratégie la plus simple est la "stop-and-wait" ARQ. L'émetteur envoie un bloc et attend, pour émettre le suivant que le récepteur lui retourne un message de bonne réception. Le principal inconvénient de cette stratégie est que le temps passé à attendre une réponse positive ou négative du récepteur est trop important.
- La seconde stratégie, nommée en anglais "go-back-N" ARQ est plus complexe et plus efficace. Les paquets de symboles sont émis de façon continue. Les réponses du récepteur arrivent après un certain délai égal au temps que met l'émetteur à envoyer N-1 autres paquets. Si une demande de retransmission (correspondant à une erreur dans un paquet) est reçue par l'émetteur, il renvoie le paquet erroné et tous les suivants. Ce système est bien adapté à certains canaux à mémoire où un paquet erroné est très souvent suivi d'autres paquets bruités. C'est le cas du canal à diffusion troposphérique à fort débit.
- Le troisième schéma est le plus complexe mais aussi le plus efficace. Les anglophones l'appellent "selective-repeat" ARQ. Comme pour le schéma précédent, les blocs sont envoyés de façon continue, mais seuls les blocs erronés sont retransmis. Le récepteur doit donc être équipé d'une mémoire-tampon conséquente pour pouvoir restituer les blocs dans l'ordre. L'implémentation de ce protocole d'ARQ est plus difficile à réaliser.

Dans toutes les études techniques publiées à ce jour à notre connaissance, les calculs des performances des diverses stratégies ARQ sont toujours effectués avec l'hypothèse d'un canal de retour non bruité. En effet, la demande de retransmission ne nécessite au maximum que quelques bits, que l'on peut coder de façon très performante, avec une redondance énorme pour être sur de leur bonne réception. Mais un tel procédé n'est pas applicable lorsque des informations à haut débit doivent circuler dans les deux sens, par exemple pour une installation téléphonique numérique duplex. Si l'on veut utiliser le canal de retour pour améliorer la qualité de la liaison, il ne saurait être question d'en augmenter sensiblement le débit. On doit donc réserver à la gestion de trame une place réduite, et il faut dans ce cas considérer le canal de retour comme bruité, ce qui dégrade nécessairement les performances puisque l'émetteur peut ne pas recevoir l'accusé de réception, positif ou négatif, du récepteur, soit parce que le canal de retour est bruité de façon non intentionnelle et aléatoire (cas du canal troposphérique) et surtout soit parce que le canal de retour est brouillé de manière intentionnelle par un brouilleur intelligent.

Un exemple d'un tel système duplex est décrit dans le document D1 = IEEE GLOBAL TELECOMMUNICATIONS CONFERENCE, Tokyo, 15-18 nov. 1987, pp. 2100-2104, IEEE, New York, USA, M. Nakamura et al. : "ARQ scheme reinforced with past acknowledgement signals". Selon l'enseignement de ce document, la décision de retransmission dans un protocole go-back-N ARQ (ainsi que pour SR-ARQ) est basée sur les signaux ACK courant et passés, de manière à permettre d'effectuer une comparaison entre des multiples transmissions redondantes de la même information. C'est-à-dire qu'un signal d'accusé de réception (ACK ou NACK) sera envoyé m fois pour chaque bloc d'information transmis. Le débit du système peut être ainsi amélioré, d'après les auteurs, par l'augmentation de la fiabilité des signaux d'accusé de réception éventuellement erronés sur un canal de retour.

Cependant, cette solution de D1 requiert pour la gestion de trame un passif de m bits dans chaque bloc transmis, ce qui réduit d'autant l'information utile qui peut être transmise dans chaque bloc. Si m+1 ACK signaux d'accusé de réception sont successivement négatifs ou perdus, un bloc (désigné par j) sera retransmis, car l'information concernant ce bloc est définitivement perdu. Si encore cette première retransmission n'est pas réussie, N blocs seront retransmis (où N est l'indice figurant dans le sigle go-back-N ARQ). Si la transmission continue à être bruitée ou mal reçue, des blocs nuls seront retransmis avec le bloc j jusqu'à sa réception confirmée.

Le document D1 considère donc le fonctionnement d'un protocole go-back-N ARQ améliorée pour pallier aux erreurs éventuelles d'accusés de réception transmis sur un canal de retour, mais la solution proposée comporte plusieurs inconvénients, notamment en ce qui concerne l'importance relative des transmissions successives et redondantes d'informations de gestion de trame et de liaison par rapport aux informations utiles. En outre, le système est obligé d'effectuer des multiples comparaisons des accusés de réception présent et passés, pour décider la requête d'une retransmission du bloc j, et éventuellement des N blocs suivants.

L'invention vise à remédier aux inconvénients de l'art antérieur.

Elle se rapporte à cet effet à un procédé de demande automatique de retransmission en cas de message mal reçu, pour installation de transmission numérique duplex à au moins une voie de retour bruitée, ce procédé utilisant un protocole de demande de retransmission du type "Go-Back-N ARQ", c'est-à-dire un protocole de demande de retransmission "ARQ" selon lequel les paquets de symboles sont émis de façon continue, mais les réponses du récepteur arrivent après un certain délai égal au temps que met l'émetteur à envoyer (N-1) autres paquets. Ce protocole est établi selon les règles habituelles du "Go-Back-N ARQ", et selon en outre au moins la règle suivante :

. Lorsqu'un accusé de réception n'a pas été reçu correctement, alors que le précédent avait été correctement reçu, on le considère comme positif, et il en est de même pour les (N-1) suivants s'ils sont eux-aussi non correctement reçus, mais dans un tel cas, on considère le $N^{ième}$ accusé de réception, s'il est toujours incorrectement reçu, comme négatif, de sorte que l'on renvoie alors les N blocs relatifs à cette série de N accusés de réception incorrectement reçus.

Avantageusement en outre, ce protocole comporte les deux règles additionnelles suivantes :

. lorsque le récepteur reçoit une demande de retransmission, il ne la prend pas en compte si le bloc redemandé a été envoyé moins de N coups auparavant.

. lorsque le récepteur redemande plusieurs fois successives, jusqu'à N fois, le même bloc, on ne prend en compte que la première redemande.

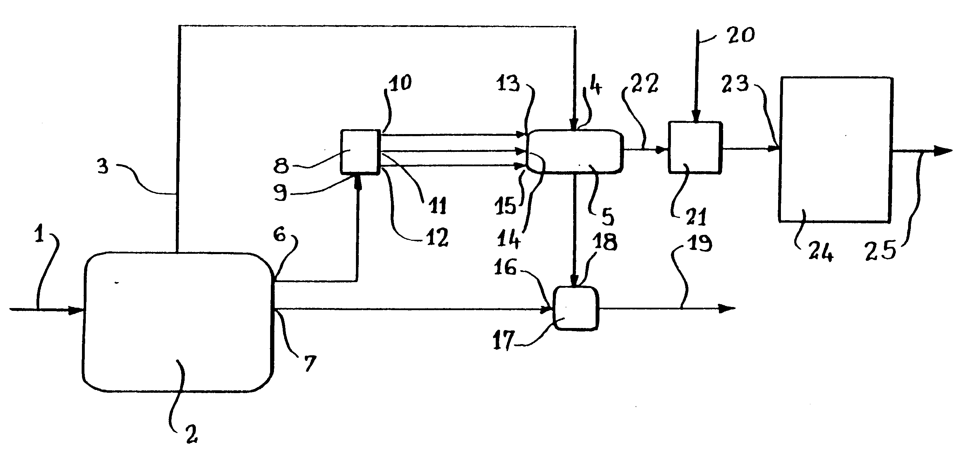

L'invention sera bien comprise, et ses avantages et autres caractéristiques ressortiront, lors de la description suivante d'un exemple d'application à une installation de liaison téléphonique numérique duplex effectuée par faisceau hertzien, en référence à la figure unique annexée qui est un schéma synoptique d'une partie de l'installation relative à l'un des deux correspondants.

En se référant à cette figure unique, il s'agit de la partie de traitement numérique du signal qui équipe un émetteur-récepteur d'installation téléphonique duplex.

Sur cette figure, la référence 1 désigne le fil d'arrivée du train numérique reçu, par voie hertzienne, de la part de l'autre correspondant.

Ce train numérique est codé par un code correcteur d'erreurs, et il est en conséquence appliqué à un décodeur-correcteur d'erreurs 2. Dans cet exemple, il est utilisé un codage convolutif par exemple de taux 1/2 et de longueur de contrainte 35, et un décodage séquentiel utilisant l'algorithme de pile. Le décodeur 2 est donc un décodeur séquentiel, qui a l'avantage connu de pouvoir fournir aisément sur une de ses trois sorties 3 une information, de fiabilité du décodage, ou "indication de confiance" (il s'agit dans ce cas de l'indication de débordement ou de non-débordement de la pile) : selon la valeur de cette indication de confiance, ou bien le décodage sera jugé efficace et il n'y aura pas lieu de faire la demande de retransmission A.R.Q., ou bien ce même décodage sera jugé inefficace et il y aura alors lieu de faire une demande de retransmission A.R.Q.

Chaque trame reçue en 1 est donc une trame codée, le codage étant effectué dans l'installation, similaire à celle représentée sur ce dessin, de l'autre correspondant dont on reçoit le message en 1.

Avant codage, la constitution de cette trame est la suivante :

| MVT | COM | INFO |
|-----|-----|------|

Elle comporte donc :

. Le très classique "Mot de verrouillage de Trame" MVT qui est destiné à la synchronisation des paquets ; ce mot de verrouillage de trame n'est pas codé par le codeur séquentiel.

. Un bloc "Commande" COM, qui comporte tous les renseignements nécessaires au protocole de demande de retransmission A.R.Q., en particulier : accusé de réception positif ou négatif (ACK = 1 ou ACK = 0), numéro N(S) du bloc émis dans la trame, numéro N(R) du bloc que l'on attend (ou que l'on redemande), un codage FCS de détection ou correction d'erreur de ce bloc COM, et un "FANION" constituant un MVT de ce bloc COM.

. Un bloc "Information" INFO qui comporte les bits d'information proprement dits.

Le train en 1 est constitué par les bits codés, qui sont compris entre les mots de verrouillage de trame MVT. L'information de confiance qui sort en 3 du décodeur séquentiel 2 est appliquée en 4 à un microprocesseur de gestion 5, tandis que sur les sorties décodées 6 et 7 de ce décodeur 2 apparaissent respectivement les bits du bloc COM décodé et les bits du bloc INFO décodé.

Un composant interface très pratique et bon marché est le composant dit "HDLC". Il s'agit d'un composant électronique largement disponible dans le commerce et qui, si on lui applique une trame numérique d'un certain format particulier sur son unique entrée, sort directement, sur chacune de ses sorties multiples, divers composants de cette trame, dont en particulier une indication de fiabilité.

Pour mémoire, il est rappelé ici le format d'un bloc d'une trame HDLC :

| FANION | ADRESSE | GESTION | INFO-COM | FCS |
|--------|---------|---------|----------|-----|

Dans le protocole HDLC, le "Fanion" est, rappelons-le, le mot de verrouillage de trame de la trame HDLC. Le champ "Adresse" sert à indiquer le destinataire des informations du champ "Info-Com". Le champ "Gestion" (8 bits) a pour but la gestion de la trame HDLC. Le mot FCS est le codage détecteur (ou correcteur) d'erreurs.

Dans le but de pouvoir utiliser un composant HDLC 8, si pratique et peu onéreux, les 24 bits des trois champs "Adresse", "Gestion", et "Info-Com" de la trame classique HDLC sont utilisés comme suit dans le bloc COM précité sortant en 6 :

. l'accusé de réception ACK est le premier bit du champ "Adresse" ;

. les autres éléments du bloc COM, à l'exclusion bien entendu de son "mot de verrouillage de trame" qui est constitué par le FANION et de ses bits de redondance constitués par le FCS, sont répartis entre les bits restants de cet ensemble de trois champs.

Ainsi donc, les bits du bloc COM qui sortent en 6 sont envoyés sur l'entrée 9 d'un boîtier interface HDLC 8, et ce dernier sort respectivement sur ses trois sorties 10, 11, 12 :

. l'accusé de réception ACK en 10 ;

. les autres éléments du bloc COM, à l'exclusion du FCS ;

. et l'information "FCS conforme" en 12, qui indique si le bloc COM a la bonne constitution.

Pour le boîtier HDLC 8, tout se passe en effet comme s'il recevait une trame HDLC continue puisqu'il reçoit une succession de blocs COM commençant tous par le Fanion, qui est son propre mot de verrouillage de trame.

Ces informations de commande, issues en 10, 11, 12 du composant HDLC 8, sont appliquées aux entrées 13, 14, 15 du microprocesseur 5, qui les gère conformément à un protocole "Go-Back-N ARQ", qui conformément à l'invention, obéit aux règles supplémentaires particulières suivantes :

. Lorsqu'un accusé de réception n'a pas été reçu correctement, alors que le précédent avait été correctement reçu, on le considère comme positif, et il en est de même pour les (N-1) suivants s'il sont eux-aussi non correctement reçus, mais, dans un tel cas, on considère le Nième accusé de réception, s'il est toujours incorrectement reçu comme négatif, de sorte que l'on renvoie alors les N blocs relatifs à cette série de N accusés de réception incorrectement reçue.

. Lorsque le récepteur reçoit une demande de retransmission, il ne la prend pas en compte si le bloc redemandé a été demandé moins de N coups auparavant.

. Lorsque le récepteur redemande plusieurs fois successives, jusqu'à N fois, le même bloc, on ne prend en compte que la première redemande.

Ainsi donc, si suite à un phénomène de "fading" (évanouissement du signal) prolongé ou suite à un brouillage intentionnel judicieusement effectué par un brouilleur intelligent, l'accusé de réception ACK n'est pas correctement reçu par un des deux correspondants N fois successives, ce correspondant réexpédie malgré tout le dernier bloc dont il n'a pas reçu l'accusé de réception positif et tous les suivants.

Les blocs INFO qui sortent en 7 du décodeur 2 sont appliqués en 16 à une mémoire-tampon 17, qui reçoit en 18, et en provenance du microprocesseur de gestion 5, un signal d'extraction des blocs utiles sortant en 19 et constituant l'information reçue.

La liaison étant "duplex", c'est à dire bidirectionnelle, le train à émettre par le correspondant en question arrive en 20 pour être stocké dans une mémoire tampon 21. En fonction des informations contenues dans le bloc COM qu'il a reçu de l'autre correspondant, le microprocesseur 5 vient chercher, dans cette mémoire 21, par la liaison 22, l'information qui doit être émise (ou réémise), en y ajoutant bien entendu le nouveau bloc COM qu'il a élaboré conformément à son protocole ARQ, et qui est destiné à l'autre correspondant.

Les trames correspondantes sont alors appliquées en 23 au codeur correcteur d'erreurs 24 de l'installation ici représentée, qui code classiquement leurs blocs COM et leurs blocs INFO, et les informations numériques à émettre sortent avec leur MVT vers la partie radioélectrique de l'émetteur.

Comme il va de soi, l'invention n'est pas limitée à l'exemple de réalisation qui vient d'être décrit, mais est bien au contraire susceptible d'être mise en oeuvre de multiples autres façons.

## Revendications

1.  Procédé de demande automatique de retransmission en cas de message mal reçu, pour installation de transmission numérique duplex à au moins une voie de retour bruitée, ce procédé utilisant un protocole de demande de retransmission du type "Go-Back-N ARQ", c'est à dire un protocole de demande de retransmission "ARQ" selon lequel les paquets de symboles sont émis de façon continue, mais les réponses du récepteur arrivent après un certain délai égal au temps que met l'émetteur à envoyer (N-1) autres paquets, ce protocole étant établi **en outre** selon les règles habituelles du "go-back-N ARQ", **caractérisé en ce qu'il** comprend en outre au moins la règle suivante :

    . lorsqu'un accusé de réception n'a pas été reçu correctement, alors que le précédent avait été correctement reçu, on le considère comme positif, et il en est de même pour les (N-1) suivants s'ils sont eux-aussi non correctement reçus, mais, dans un tel cas, on considère le Nième accusé de réception, s'il est toujours incorrectement reçu, comme négatif, de sorte que l'on renvoie alors les N blocs relatifs à cette série de N accusés de réception incorrectement reçus.

2.  Procédé de demande automatique de retransmission selon la revendication 1, caractérisé en ce que ce protocole comporte en outre les deux règles additionnelles suivantes :

    . lorsque le récepteur reçoit une demande de retransmission, il ne la prend pas en compte si le bloc redemandé a été demandé moins de N coups auparavant ;

    . lorsque le récepteur redemande plusieurs fois successives, jusqu'à N fois, le même bloc, on ne prend en compte que la première redemande.

3.  Procédé selon la revendication 1 ou la revendication 2, caractérisé en ce que, dans le but d'utiliser à la réception un composant HDLC (8), les bits des trois champs "Adresse", "Gestion", et "Info-Com", de la trame classique HDLC sont utilisés comme suit dans le bloc de commande (COM) - comportant tous les renseignements nécessaires au protocole de retransmission ARQ - de la trame émise :

    . l'accusé de réception (ACK), positif ou négatif, est le premier bit du champ "Adresse" ;

les autres éléments du bloc de Commande (COM), à l'exclusion de son "mot de verrouillage de trame" (FANION) et de ses bits de redondance (FCS) sont répartis entre les bits restants de cet ensemble de trois champs.

4. Equipement de transmission numérique duplex comportant pour chaque correspondent, au moins les moyens suivants :
- un dispositif (2) de décodage de détection ou correction d'erreurs du signal reçu (1), avec sortie (3) de signal d'indication de fiabilité du décodage, sortie (6) d'un bloc de commande (COM) décodé, et sortie (7) du bloc information (INFO) - comportant les bits utiles d'information-décodés ;
- un microprocesseur de gestion (5) ;
- une mémoire tampon (17) qui emmagasine ces blocs Information (INFO) décodés reçus, et de laquelle est extrait, sous commande (18) du microprocesseur (5), le train utile reçu (19) et
- une autre mémoire tampon (21) qui emmagasine les trains (20, 22) à émettre sous gestion du microprocesseur (5), et qui comporte une sortie (23) d'émission de ces trains ;
   **caractérisé en ce que :** les bits des trois champs "Adresse", "Gestion", et "Info-Com" de la trame classique HDLC sont utilisés comme suit dans ledit bloc de commande (COM) comportant tous les renseignements nécessaires au protocole de retransmission go-back-N ARQ de la trame émise :
- l'accusé de réception (ACK), positif ou négatif, est le premier bit du champ "adresse" ;
- les autres éléments dudit bloc de commande (COM), à l'exclusion de son "mot de verrouillage de trame" (FANNION) et de ses bits de redondance (FCS) sont répartis entre les bits restants de cet ensemble de trois champs ;
   **et caractérisé en ce qu'il** comporte en outre
- un composant HDLC (8) recevant sur son entrée (9) ledit bloc de commande (COM) décodé, et dont les sorties (10, 11, 12) sont appliquées au dit microprocesseur de gestion (5),
   de manière à permettre la mise en oeuvre d'un procédé selon l'une quelconque des revendications précédentes.

## Patentansprüche

1. Verfahren zum automatischen Anfordern einer Wiederholung der Übertragung im Falle einer schlecht empfangenen Nachricht, für digitale Duplex-Sendeanlagen mit mindestens einem rauschgestörten Rückkanal, wobei das Verfahren ein Wiederholungsübertragungsprotokoll des Typs "go-back-N ARQ" anwendet, d.h. ein ARQ-Protokoll zur Wiederholung einer Übertragung, gemäß dem die Symbolpakete kontinuierlich ausgesendet werden, die Antworten des Empfängers jedoch erst nach einer gewissen Verzögerung ankommen, die der Zeit entspricht, welche der Sender braucht, um N-1 weitere Pakete zu übermitteln, wobei das Protokoll weiter entsprechend den üblichen Regeln des "Go-Back-N ARQ" erstellt wird, dadurch gekennzeichnet, daß das Verfahren außerdem mindestens die folgende Regel beachtet: wenn eine Empfangsbestätigung nicht richtig empfangen worden ist, aber die vorhergehende richtig empfangen worden ist, betrachtet man sie als positiv, und das gleiche gilt für die (N-1) folgenden, wenn auch sie nicht richtig empfangen worden sind, wobei man aber in einem solchen Falle die N-te Empfangsbestätigung, wenn sie nach wie vor unrichtig empfangen wird, als negativ betrachtet, derart, daß man dann die N Blöcke, die sich auf diese Serie von N falsch empfangenen Empfangsbestätigungen beziehen, wiederholt.

2. Verfahren zum automatischen Anfordern einer Wiederholung der Übertragung nach Anspruch 1, dadurch gekennzeichnet, daß das Protokoll weiter die beiden folgenden, zusätzlichen Regeln beachtet:
- wenn der Empfänger einer Wiederholungsanforderung empfängt, berücksichtigt er sie nicht, wenn der erneut angeforderte Block vorher weniger als N mal angefordert worden ist;
- wenn der Empfänger mehrere Male nacheinander, bis zu N mal, den gleichen Block erneut anfordert, wird nur die erste Wiederholungsanforderung berücksichtigt.

3. Verfahren nach Anspruch 1 oder 2, dadurch gekennzeichnet, daß mit dem Ziel, beim Empfang einen Baustein HDLC (8) zu benutzen, die Bits der drei Felder "Adresse", "Verwaltung" und "Info-Com" des klassischen Rahmens HDLC wie folgt in dem alle für das Protokoll ARQ zur Wiederholung der Übertragung benötigten Informationen enthaltenden Steuerblock (COM) des gesendeten Rahmens benutzt werden:
- die Empfangsbestätigung (ACK), positiv oder negativ, ist das erste Bit des Feldes "Adresse";
- die anderen Elemente des Steuerblocks (COM), mit Ausnahme seines "Rahmenverriegelungswortes" (FANION) sowie seine Redundanzbits (FCS) sind über die verbleibenden Bits dieser aus den drei Feldern bestehenden Einheit verteilt.

4. Digitale Duplex-Übertragungsanlage, die für jeden Teilnehmer mindestens die folgenden Mittel aufweist:
   - eine Dekodiereinrichtung (2) zum Erfassen oder Korrigieren von Fehlern im empfangenen Signal (1), die einen Ausgang (3) für ein die Zuverlässigkeit der Dekodierung anzeigendes Signal, einen Ausgang (6) für einen dekodierten Steuerblock (COM) und einen Ausgang (7) für den Informationsblock (INFO) enthält, welcher die dekodierten Nutzinformationsbits enthält;
   - einen Verwaltungsmikroprozessor (5);
   - einen Pufferspeicher (17), der die empfangenen und dekodierten Informationsblöcke (INFO) speichert und aus dem die empfangene Nutzdatenfolge (19) entnommen wird; und
   - einen weiteren Pufferspeicher (21), der die unter der Verwaltung des Mikroprozessors (5) zu sendenden Folgen (20, 22) speichert und der einen Sendeausgang (23) für diese Folgen aufweist; dadurch gekennzeichnet, daß die Bits der drei Felder "Adresse", "Verwaltung" und "INFO-COM" des üblichen HDCL-Rahmens im Steuerblock (COM), der sämtliche für das Protokoll goback-N-ARQ zur Wiederholung des gesendeten Rahmens benötigten Informationen enthält, wie folgt verwendet werden:
   - die Empfangsbestätigung (ACK), positiv oder negativ, ist das erste Bit des Feldes "Adresse";
   - die anderen Elemente des Steuerblocks (COM), mit Ausnahme seines Rahmenverriegelungswortes (FANION) und seiner Redundanzbits (FCS) sind über die verbleibenden Bits dieser aus drei Feldern bestehenden Einheit verteilt;
   dadurch gekennzeichnet, daß die Anlage weiter einen Baustein HDLC (8) aufweist, der an seinem Eingang (9) den dekodierten Steuerblock (COM) empfängt, und dessen Ausgänge (10, 11, 12) an den Verwaltungsmikroprozessor (5) angelegt sind, derart, daß die Durchführung eines Verfahrens gemäß einem beliebigem vorhergehenden Anspruch ermöglicht wird.

## Claims

1. A method of automatically requesting retransmission of a badly received message, for use in a duplex digital transmission installation having at least one return channel, the method making use of a go-back-N ARQ type protocol, i.e. an automatic repeat request protocol in which packets of symbols are transmitted on a continuous basis, and responses from the receiver arrive after a certain time delay equal to the time taken by the transmitter to transmit (N-1) other packets, said protocol being further based on the conventional go-back-N ARQ rules, the method being characterized in that it further comprises at least the following additional rule:

   when an acknowledgment is not received correctly, after a preceding acknowledgment that was received correctly, then the incorrectly received acknowledgment is assumed to be positive, as are the (N-1) following acknowledgments if they too are received incorrectly, but under such circumstances, if the Nth acknowledgment is still incorrectly received, it is assumed to be negative and the N blocks relating to this series of N incorrectly received acknowledgments are then repeated.

2. A method of automatically requesting retransmission according to claim 1, characterized in that this protocol further includes the following two additional rules:

   when the receiver receives a repeat request, it does not take it into account if the requested block has been requested less than N turns previously; and

   when the receiver requests the same block several times in succession up to N times, only the first request is taken into account.

3. A method according to claim 1 or 2, characterized in that in order to make use of an HDLC component (8) on reception, the bits in the conventional ADDRESS, CONTROL, and INFO-COM fields of a conventional HDLC frame are used as follows for the command block (COM) in the transmitted frame, which command block contains all of the information required for implementing the ARQ protocol:

   the positive or negative acknowledgment (ACQ) constitutes the first bit of the ADDRESS field; and

   the other items in the command block (COM), apart from its own frame locking word (FLAGS) and its redundancy bits (FCS), are distributed over the remaining bits in the three said fields.

4. Duplex digital transmission equipment including for each party at least the following means:

   a decoding circuit (2) for detecting or correcting errors in the received signal (1), having an output (3) for a decoding reliability flag signal, an output (6) for a decoded command block (COM), and an output (7) for an information block (INFO) containing the useful bits of the decoded information;

a controlling microprocessor (5);

a buffer memory (17) which stores said received decoded information blocks (INFO) and from which the useful received data train (19) is extracted under the control (18) of the microprocessor (5); and

another buffer memory (21) which stores the data trains (20, 22) for transmitting under the control of the microprocessor (5), and which includes a transmission output (23) for said data trains;

the duplex digital transmission equipment being characterized in that:

the bits of the three fields ADDRESS, CONTROL, and INFO-COM in a conventional HDLC frame are used as follows in said command block (COM) including all the information required by the retransmission protocol go-back-N ARQ of the emitted frame:

the positive or negative acknowledgment bit (ACK) is the first bit in the ADDRESS field; and

the other items in said command block (COM) (other than its frame locking word (FLAGS) and its redundancy bits (FCS)), are distributed over the remaining bits of this set of three fields; and

being further characterized in that it also comprises:

an HDLC component (8) receiving said decoded command block (COM) on its input (9) and having its outputs (10, 11, 12) applied to said controlling microprocessor (5) in such a manner to allow the implementation of a method according to any preceding claim.